# EUROPÄISCHE PATENTANMELDUNG

(11) **EP 0 926 581 A2**
(43) Veröffentlichungstag der Anmeldung: **30.06.1999**
(21) Anmeldenummer: 98123645.8
(22) Anmeldetag: 10.12.1998
(51) Int. Cl.: G05G 1/14, G05G 5/03

(54) **Fahrpedaleinrichtung**

(30) Priorität: 20.12.1997 DE 19757084
(71) Anmelder: Hella KG Hueck & Co., 59552 Lippstadt (DE)
(72) Erfinder: Berglar, Heinrich, 59510 Lippetal (DE)

(57) **Zusammenfassung**

Beschrieben wird eine Fahrpedaleinrichtung zur Einstellung der Fahrgeschwindigkeit eines Kraftfahrzeuges mit einem automatischen Getriebe. Die Fahrpedaleinrichtung weist ein federndes Kick-down-Element (3) auf, welches an der der Fahrpedalplatte (2) gegenüberliegenden Seite des Fahrpedalhebels (1) angeordnet ist. Damit wird eine besonders steile Kraft-Weg-Charakteristik der Fahrpedalbetätigung beim Erreichen des Kick-down-Bereiches erzielt, welche eine besonders gute Erkennbarkeit der Kick-down-Stellung des Fahrpedales ermöglicht. Die erfindungsgemäße Fahrpedaleinrichtung ist überdies besonders einfach und exakt justierbar.

## Beschreibung

Die Erfindung betrifft eine Fahrpedaleinrichtung zur Einstellung der Fahrgeschwindigkeit eines Kraftfahrzeuges mit einem automatischen Getriebe, mit einem in einem Gehäuse angeordneten Drehsensor zur Bestimmung der Fahrpedalstellung, mit einem Fahrpedalhebel, der mit der Fahrpedalplatte gekoppelt ist und die Betätigungswelle des Drehsensors antreibt, und mit einem Kick-down-Element, welches in einem Betätigungsbereich des Fahrpedales eine erhöhte Gegenkraft erzeugt.

Das Kick-down-Element hat bekanntermaßen die Funktion, daß der Fahrer eines Kraftfahrzeuges mit einem automatischen Getriebe das Erreichen der Kick-down-Stellung anhand der Kraftcharakteristik des Fahrpedales erkennen kann. Der Kick-down-Bereich folgt dabei vorteilhafterweise unmittelbar auf die Vollaststellung des Fahrpedales, wobei das Erreichen der Kick-down-Stellung sowohl für die Sensorik als auch für den Fahrer deutlich erkennbar sein muß.

Aus der DE 195 21 821 C1 ist eine Fahrpedaleinrichtung bekannt, bei der das Kick-down-Element im Gehäuse der Fahrpedaleinrichtung angeordnet ist und aus einer U-förmigen Blattfeder besteht, die durch eine nasenartige Anformung an einem mit der Betätigungswelle verbundenen Hebel auseinandergedrückt wird.

Hierbei ergibt sich aus dem Fahrpedalhebel einerseits und dem Hebel im Gehäuse andererseits, die beide mit der Betätigungswelle als gemeinsamem Drehpunkt verbunden sind, ein zweiarmiger Hebel, bei welchem die Länge des Fahrpedalhebels die Länge des Hebels im Gehäuse im allgemeinen um ein Mehrfaches übersteigt.

Aufgrund des Hebelgesetzes wird somit der durch das Kick-down-Element verursachte Kraftanstieg stark abgeschwächt am Fahrpedal wirksam und erstreckt sich zudem über einen, verglichen mit der Kraft-Weg-Charakteristik des Kick-down-Elementes, relativ großen Pedalweg. Dieses bewirkt, daß das Betätigungsgefühl des Fahrpedales in der Kick-down-Stellung nicht einem deutlich erkennbaren Druckpunkt entspricht und damit das Erreichen des Kick-down-Bereiches nur undeutlich bzw. ungenau erkennbar ist.

Um eine unmittelbare Betätigung des Kick-down-Elementes durch den Fahrpedalhebel zu erreichen, könnte vorgesehen werden, das Kick-down-Element als separates Gerät unterhalb des Fahrpedalhebels oder der Fahrpedalplatte am Fahrzeugboden anzuordnen.

Hierzu müßten aber die Fahrpedaleinrichtung und das Kick-down-Element relativ zueinander justiert werden, damit sich der Kick-down-Bereich möglichst ohne Pedalleerweg an die Vollaststellung des Fahrpedales anschließt.

Um hier mögliche Toleranzen auszuschließen und das Erreichen der Kick-down-Stellung eindeutig zu sensieren, ist daher ein Kick-down-Schalter am Kick-down-Element zweckmäßig, der aber einen zusätzlichen Verkabelungsaufwand erfordert.

Da ein solcher Schalter im Schmutzbereich des Fahrzeugs angeordnet ist, muß dieser zudem besonders gut gegen Beeinträchtigungen durch äußere Einflüsse geschützt sein.

Es ist daher die Aufgabe der Erfindung, eine Fahrpedaleinrichtung zu schaffen, bei der das Erreichen der Kick-down-Stellung besonders deutlich erkennbar ist und die dabei besonders einfach und kostengünstig herstellbar, montierbar und justierbar ist.

Diese Aufgabe wird erfindungsgemäß dadurch gelöst, daß das Kick-down-Element an der der Fahrpedalplatte gegenüberliegenden Seite des Fahrpedalhebels angeordnet ist.

Da das Kick-down-Element somit direkter, das heißt ohne eine große Hebelübersetzung, durch den Fahrpedalhebel betätigt wird, ergibt sich eine besonders steile Kraft-Weg-Charakteristik bei der Fahrpedalbetätigung beim Erreichen der Kick-down-Stellung.

Dies bedeutet, daß der Fahrer die Kick-down-Position als deutlich spürbaren Druckpunkt erlebt, wobei nach Überwindung der Gegenkraft des Kick-down-Elementes der Kick-down ohne Pedalleerweg unmittelbar auf die Vollaststellung folgt.

Vorteilhaft ist auch, daß die erfindungsgemäße Fahrpedaleinrichtung besonders einfach und genau justierbar ist. Da das Kick-down-Element mit dem Fahrpedalhebel verbunden ist, kann die Anordnung des Fahrpedalhebels an der Betätigungswelle bzgl. des Abstandes zwischen dem Kick-down-Element und dessen Gegenanschlag am Fahrzeugboden (z. B. mittels einer Abstandslehre) justiert werden.

Zusätzliche Toleranzen, wie sie bei einer separaten Anordnung des Kick-down-Elementes entstehen, werden damit vermieden. Der Genauigkeitsgewinn ist dabei so groß, daß sogar auf einen Schalter zur Sensierung der Kick-down-Stellung verzichtet werden kann, was eine erhebliche Kosteneinsparung bedeutet.

Das Erreichen der Kick-down-Stellung wird statt dessen aus dem Signal des im Gehäuse der Fahrpedaleinrichtung angeordneten Drehsensors bestimmt.

Dies ist bei einer Fahrpedaleinrichtung mit einer besonders steilen Kraft-Weg-Charakteristik zwischen der Vollaststellung und der Kick-down-Stellung nur bei einer exakten Justierung des Fahrpedalhebels möglich, da sich die Sensorsignale der Kick-down-Stellung von denen der Vollaststellung nur geringfügig unterscheiden, zumal die Pedalbewegung noch durch die erwähnten Hebelverhältnisse untersetzt auf den Drehsensor übertragen werden. Die exakte Justierbarkeit der Fahrpedaleinrichtung ist durch die erfindungsgemäße Anordnung des Kick-down-Elementes am Fahrpedalhebel gegeben.

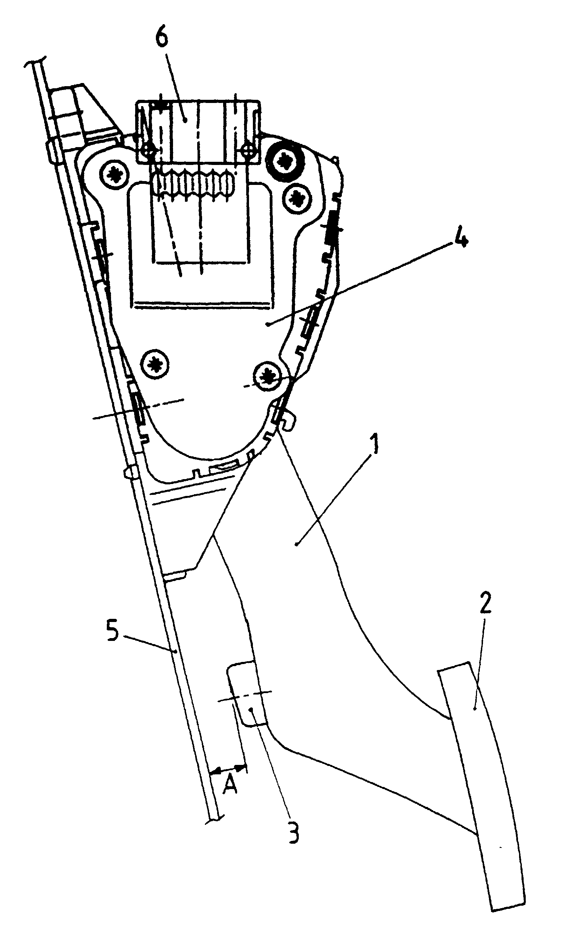

Im folgenden soll anhand der Zeichnung ein Ausführungsbeispiel einer erfindungsgemäßen Fahrpedaleinrichtung dargestellt und näher erläutert werden.

Die einzige Figur zeigt die erfindungsgemäße Fahrpedaleinrichtung in einer Seitenansicht. An dem Gehäuse (4) ist ein nicht dargestellter Drehsensor angeordnet, welcher die jeweilige Fahrpedalstellung in elektrische Signale umsetzt und an elektrische Verbindungsmittel, wie z. B. eine an das Gehäuse (4) angeformte Steckerleiste (6), gibt.

Der Drehsensor wird über eine aus dem Gehäuse (4) herausgeführte (ebenfalls nicht dargestellte) Welle betätigt, mit welcher der Fahrpedalhebel (1) verbunden ist. Dieser Fahrpedalhebel (1) bildet zusammen mit einer Fahrpedalplatte (2) das Fahrpedal (1, 2) aus.

Die gesamte Fahrpedaleinrichtung ist mit einer Wandung (5) der Fahrzeugkarosserie verbunden, von der in der Zeichnung ein Ausschnitt schematisch dargestellt ist. Gegenüber der Fahrpedalplatte (2) ist am Fahrpedalhebel (1) ein Kick-down-Element (3) angeformt. Das Kick-down-Element (3) erzeugt mittels einer geeignet geformten Feder eine Gegenkraft gegen die Bewegung des Fahrpedales (1, 2), sobald es gegen die Wandung (5) der Fahrzeugkarosserie gedrückt wird.

Die Kraft-Weg-Kennlinie ist dabei relativ steil, so daß der Fahrer eine deutlich spürbare haptische Rückmeldung über das Erreichen der Kick-down-Stellung erhält.

Die steile Kraft-Weg-Kennlinie wird dabei vorteilhafterweise auch dadurch erreicht, daß das Kick-down-Element (3) in der Nähe der Fahrpedalplatte angeordnet ist, so daß keine große Hebelwirkung die zur Betätigung erforderliche Kraft verringert und den Betätigungsweg vergrößert.

Vorteilhaft ist, das Kick-down-Element als Feder auszubilden, die nach einem vorgegebenen kurzen Betätigungsweg reversibel umspringt ("Knackfrosch-Prinzip"). Hierdurch erhält man beim Erreichen der Kick-down-Stellung einen besonders deutlich spürbaren Druckpunkt bei der Fahrpedalbetätigung. Da das Kick-down-Element (3) bereits fest mit dem Fahrpedalhebel (1) verbunden ist, kann die Fahrpedaleinrichtung vorteilhafterweise bereits vollständig vormontiert in das Fahrzeug eingebaut werden. Lediglich ein Abstand (A) zwischen Kick-down-Element und Fahrzeugkarosserie ist, etwa mittels einer Abstandslehre, beispielsweise anhand eines vorgegebenen Sensorausgangssignales einzujustieren. Vorteilhaft ist, daß eine solche Justage sehr einfach und exakt ausführbar ist und daß hiernach das Erkennen der Kick-down-Stellung anhand des Sensorausgangssignales möglich ist und daß kein zusätzlicher Kick-down-Schalter benötigt wird.

### Bezugszeichenliste

### Fahrpedaleinrichtung

- 1: Fahrpedalhebel
- 2: Fahrpedalplatte
- 1, 2: Fahrpedal
- 3: Kick-down-Element
- 4: Gehäuse
- 5: Wandung (der Fahrzeugkarosserie)
- 6: Steckerleiste

- A: (justierbarer) Abstand

## Patentansprüche

1. Fahrpedaleinrichtung zur Einstellung der Fahrgeschwindigkeit eines Kraftfahrzeuges mit einem automatischen Getriebe, mit einem in einem Gehäuse (4) angeordneten Drehsensor zur Bestimmung der Fahrpedalstellung, mit einem Fahrpedalhebel (1), der mit der Fahrpedalplatte (2) gekoppelt ist und die Betätigungswelle des Drehsensors antreibt, und mit einem Kick-down-Element (3), welches in einem Betätigungsbereich des Fahrpedales (1, 2) eine erhöhte Gegenkraft erzeugt, dadurch gekennzeichnet, daß das Kick-down-Element (3) an der der Fahrpedalplatte (2) gegenüberliegenden Seite des Fahrpedalhebels (1) angeordnet ist.

2. Fahrpedaleinrichtung nach Anspruch 1, dadurch gekennzeichnet, daß das Kick-down-Element (3) eine steile Kraft-Weg-Kennlinie mit einer Druckpunktcharakteristik aufweist.

3. Fahrpedaleinrichtung nach Anspruch 1, dadurch gekennzeichnet, daß das Kick-down-Element (3) an dem Fahrpedalhebel (1) auf Höhe der Fahrpedalplatte (2) angeordnet ist.

4. Fahrpedaleinrichtung nach Anspruch 1, dadurch gekennzeichnet, daß der Drehsensor bei der Betätigung des Fahrpedales (1, 2) das Erreichen der Kick-down-Position sensiert.
